# EUROPEAN PATENT APPLICATION

(11) **EP 4 080 362 A2**
(43) Date of publication of application: **26.10.2022**
(21) Application number: 22188254.1
(22) Date of filing: 02.08.2022
(51) Int. Cl.: G06F 9/455

(54) **METHOD AND APPARATUS FOR CREATING A CONTAINER**

(30) Priority: 20.08.2021 CN 202110961131
(71) Applicant: Beijing Baidu Netcom Science and Technology Co., Ltd., Beijing 100085 (CN)
(72) Inventor: SONG, Jialiang, Beijing, 100085 (CN)
(74) Representative: Richly & Ritschel Patentanwälte PartG mbB

(57) **Abstract**

The present disclosure provides a method for creating a container, an apparatus for creating a container, a device, a medium, and a program product, and relates to the technical field of cloud computing and cloud storage. An embodiment of the method includes: acquiring a description file of a to-be-scheduled container group (Pod), where the description file of the Pod is used for describing resource demand information; determining, based on the description file of the to-be-scheduled Pod and idle resource information of each of work nodes, a target work node from the work nodes, and binding the to-be-scheduled Pod to the target work node; and sending a container runtime interface (CRI) request to a container engine, where the CRI request is used for instructing node to create a target container at the target work based on configuration information in the CRI request, and the configuration information is used for limiting an authority of the target container.

## Description

### TECHNICAL FIELD

The present disclosure relates to the field of computers, particularly relates to the technical field of cloud computing and cloud storage, and more particularly relates to a method and apparatus for creating a container, a device, a medium, and a program product.

### BACKGROUND

Instances of various operating systems on advanced RISC machine (ARM) cloud need to access various devices on a Linux host, such as a user-level input device or Fuse (a virtual file system in user space), to implement related functions of the various operating systems.

At present, kubernetes (referred to as k8s) implements device mapping using the following solutions: (1) a dedicated device being provided by a corresponding hardware manufacturer with a dedicated device plug-in, such as a Nvidia GPU plug-in from Nvidia; and (2) a privileged mode being enabled for a Pod of the k8s.

### SUMMARY

Embodiments of the present disclosure present a method for creating a container, an apparatus for creating a container, a device, a medium, and a program product.

In some embodiments of the present disclosure, an embodiment of the present disclosure presents a method for creating a container, including: acquiring a description file of a to-be-scheduled container group (Pod), where the description file of the Pod is used for describing resource demand information; determining, based on the description file of the to-be-scheduled Pod and idle resource information of each of work nodes, a target work node from the work nodes, and binding the to-be-scheduled Pod to the target work node; and sending a container runtime interface (CRI) request to a container engine, where the CRI request is used for instructing to create a target container at the target work node based on configuration information in the CRI request, and the configuration information is used for limiting an authority of the target container.

In some embodiments of the present disclosure, an embodiment of the present disclosure presents an apparatus for creating a container, including: an information acquiring module configured to acquire a description file of a to-be-scheduled Pod, where the description file of the Pod is used for describing resource demand information; a node determining module configured to determine, based on the description file of the to-be-scheduled Pod and idle resource information of each of work nodes, a target work node from the work nodes, and bind the to-be-scheduled Pod to the target work node; and a container creating module configured to send a CRI request to a container engine, where the CRI request is used for instructing node to create a target container at the target work based on configuration information in the CRI request, and the configuration information is used for limiting an authority of the target container.

In some embodiments of the present disclosure, an embodiment of the present disclosure presents an electronic device, including: at least one processor; and a memory communicatively connected to the at least one processor; where the memory stores instructions executable by the at least one processor, and the instructions are executed by the at least one processor, such that the at least one processor can execute the method according to the first aspect.

In some embodiments of the present disclosure, an embodiment of the present disclosure presents a non-transitory computer readable storage medium storing computer instructions, where the computer instructions are used for causing a computer to execute the method according to the first aspect.

In some embodiments of the present disclosure, an embodiment of the present disclosure presents a computer program product, including a computer program, where the computer program, when executed by a processor, implements the method according to the first aspect.

The method for creating a container, the apparatus for creating a container, the device, the medium, and the program product provided in embodiments of the present disclosure first acquire a description file of a to-be-scheduled Pod, where the description file of the Pod includes a device name and a device quantity; then determine, based on the description file of the to-be-scheduled Pod and the idle resource information at each of the work node, a target work node from the work nodes, and bind the to-be-scheduled Pod to the target work node; and finally send a CRI request to a container engine, where the CRI request is used for instructing to create a target container at the target work node based on configuration information in the CRI request, and the configuration information is used for limiting an authority of the target container; thereby determining the target work node from the work nodes based on the description file of the to-be-scheduled Pod and the idle resource information at each work node; and then creating the target container based on the configuration information of the CRI request sent to the container engine in the CRI request at the target work node, such that the authority of the target container is consistent with the configuration information, thus implementing the control over the container authority.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

After reading detailed descriptions of non-limiting embodiments with reference to the following accompanying drawings, other features, objectives and advantages of the present disclosure will become more apparent. The accompanying drawings are used for better understanding of the present solution, and do not impose any limitation on the present disclosure. In the accompanying drawings:
Fig. 1 is a diagram of an exemplary system architecture in which embodiments of the present disclosure may be implemented;
Fig. 2 is a flowchart of a method for creating a container according to an embodiment of the present disclosure;
Fig. 3 is a schematic diagram of interaction between components in a k8s cluster;
Fig. 4 is a flowchart of sequential control;
Fig. 5 is a schematic structural diagram of an apparatus for creating a container according to an embodiment of the present disclosure; and
Fig. 6 is a block diagram of an electronic device configured to implement embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here without departing from the scope and spirit of the present disclosure. Similarly, for clearness and conciseness, descriptions of well-known functions and structures are omitted in the following description.

It should be noted that the embodiments in the present disclosure and the features in the embodiments may be mutually combined on a non-conflict basis. The present disclosure will be described in detail below with reference to the accompanying drawings and in combination with the embodiments.

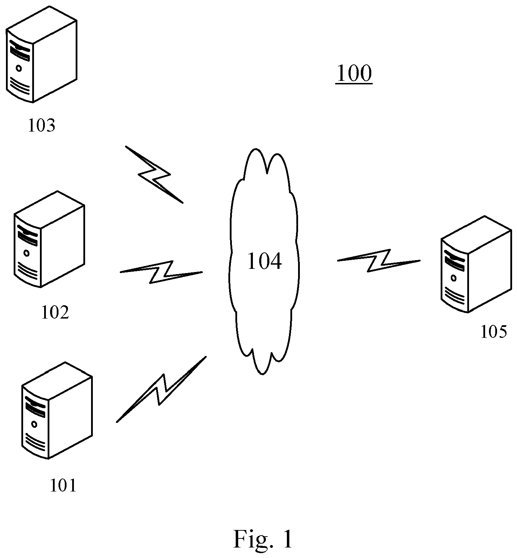

Fig. 1 shows an example system architecture 100 in which a method for creating a container or an apparatus for creating a container of embodiments of the present disclosure may be implemented.

As shown in Fig. 1, the system architecture 100 may include servers 101, 102, and 103, a network 104, and an electronic device 105. The network 104 serves as a medium providing a communication link between the servers 101, 102, and 103 and the electronic device 105. The network 104 may include various types of connections, such as wired or wireless communication links, or optical cables.

A user may interact with the electronic device 105 using the servers 101, 102, and 103 via the network 104.

The servers 101, 102, and 103 may be hardware, or may be software. When the servers 101, 102, 103 are hardware, the servers may be implemented as a distributed server cluster composed of a plurality of servers, or may be implemented as a single server. When the servers 101, 102, and 103 are software, the servers may be implemented as a plurality of software programs or software modules (e.g., software programs or software modules for providing distributed services), or may be implemented as a single software program or software module. This is not specifically limited here.

The server 105 may be a server providing various services, such as a back-end server providing support for the servers 101, 102, and 103.

It should be noted that the electronic device 105 may be hardware, or may be software.

It should be noted that the method for creating a container provided in the embodiments of the present disclosure is generally executed by the electronic device 105. Accordingly, the apparatus for creating a container is generally provided in the electronic device 105.

It should be understood that the numbers of electronic devices, networks, and servers in Fig. 1 are merely illustrative. Any number of electronic devices, networks, and servers may be provided based on actual requirements.

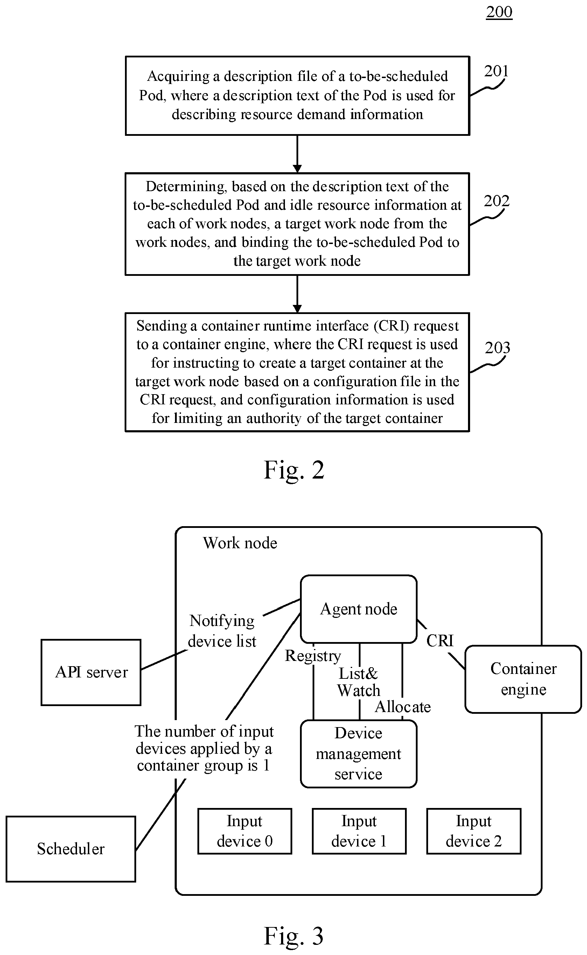

Further referring to Fig. 2, a process 200 of a method for creating a container according to an embodiment of the present disclosure is shown. The method for creating a container may include the following steps.

Step 201: acquiring a description file of a to-be-scheduled Pod, where the description file of the Pod is used for describing resource demand information.

In the present embodiment, an executing body of the method for creating a container (for example, the electronic device 105 shown in Fig. 1) may acquire the description file of the to-be-scheduled container group (Pod). The description file may be used for indicating demand information of the Pod, and the demand information may be, e.g., a demand amount for devices.

Here, the description file of the to-be-scheduled Pod may be used for defining a demand of the Pod, such as a device name and a device quantity.

It should be noted that all Pods in a k8s cluster are in the same shared network address space, i.e., each Pod may be accessed through IP addresses of other Pods.

Step 202: determining, based on the description file of the to-be-scheduled Pod and idle resource information at each of work nodes, a target work node from the work nodes, and binding the to-be-scheduled Pod to the target work node.

In the present embodiment, the executing body may determine, based on the description file of the to-be-scheduled Pod and the idle resource information at each of the work nodes, the target work node from the work nodes, and bind the to-be-scheduled Pod to the target work node. The work node may be a node relative to a master node. In some optional implementations of the present embodiment, the idle resource information of each of the work node includes the number of available devices at each work node. The number of available devices at the work node may be determined based on a load condition of each device at the work node.

Accordingly, in that example, determining, based on the description file of the to-be-scheduled Pod and the number of available devices at each of the work nodes, the target work node from the work nodes may include:

matching each device name and the device quantity in the description file of the to-be-scheduled Pod with each device name and the number of available devices at each of the work nodes, to obtain the target work node from the work nodes by the matching.

It should be noted that the matching may be achieved if device names and the number of available devices at the target work node are identical with device names and the device number in the description file of the to-be-scheduled Pod respectively; or, the device names and the number of available devices at the target work node include the device names and the device quantity in the description file of the to-be-scheduled Pod.

Step 203: sending a CRI request to a container engine, where the CRI request is used for instructing to create a target container at the target work node based on configuration information in the CRI request, and the configuration information is used for limiting an authority of the target container.

In the present embodiment, the executing body may send the container runtime interface (CRI) request to the container engine, to instruct, based on the CRI request, the target work node to create the target container based on the configuration information in the CRI request.

It should be noted that the configuration information is information obtained by analyzing a configuration file preset by a user. The configuration information is used for limiting the authority of the target container, e.g., the container may, e.g., read/write/modify which devices. The container engine may include a docker or other containers, for example, Containerd, RKT, and CRI (Open Container Initiative)-O.

Here, the authority may be an authority of controlling the target container based on the configuration information, such as an operation authority, an path access authority, and a device quantity.

In the method for creating a container provided in the embodiment of the present disclosure, first a description file of a to-be-scheduled Pod is acquired, where the description file of the Pod includes a device name and a device quantity; then based on the description file of the to-be-scheduled Pod and the number of available devices at each of the work node, a target work node is determined from the work nodes, and the to-be-scheduled Pod is bound to the target work node; and finally a CRI request is sent to a container engine, where the CRI request is used for instructing to create a target container at the target work node based on configuration information in the CRI request, and the configuration information is used for limiting an authority of the target container. It is possible to determine the target work node from the work nodes based on the description file of the to-be-scheduled Pod and the number of available devices at each work node; and then create the target container based on the configuration information of the CRI request sent to the container engine in the CRI request at the target work node, such that the authority of the target container is consistent with the configuration information, thus achieve a control over the container authority.

In some optional implementations of the present embodiment, idle resource information of each work node is determined based on the following steps: registering the configuration information in a node agent (kubelet); and reporting, in response to registering of the configuration information being completed, the idle resource information of each work node to the kubelet.

In the present implementation, the configuration information may be registered in the kubelet through a gRPC service of the kubelet; and after registering of the configuration information is completed, the idle resource information of each work node may be reported to the kubelet.

Specifically, a device management service is first enabled; and then, the configuration information is read, and the configuration information is registered in the kubelet through the gRPC service of the kubelet. If the configuration information involves a plurality of devices, it is necessary to register the configuration information of the plurality of devices successively, until the registering of the configuration information of the plurality of devices is completed.

It should be noted that after the configuration information is registered in the kubelet, IDs (identity document) in registering information of the registered devices will be recorded, and the configuration information will be updated periodically through the gRPC (remote procedure invoking) service of List&Watch. The device management service may be a corresponding service of managing an input device.

In the present implementation, the idle resource information of each work node may be reported to the kubelet after the configuration information is registered in the kubelet, such that the kubelet obtains the idle resource information of each work node.

In some optional implementations of the present embodiment, the configuration information may include: a device name, a device quantity, an operation authority, a host device file path, and an in-container device file path.

Here, the operation authority may be, e.g., a read/write authority. The host device file path may be an access path of a host device file. The in-container device file path may be an access path of a text by the created container.

In the present implementation, the authority of the target container may be controlled based on the device name, the device quantity, the operation authority, the host device file path, and the in-container device file path included in the configuration information.

In some optional implementations of the present embodiment, the method for creating a container may further include: sending the number of available devices to an API server in a form of an extended resource.

In the present implementation, after the registering of the configuration information is completed, the executing body may send a heartbeat to the API Server at a preset frequency in the form of the extended resource, to send the number of available devices to the API Server.

In some optional implementations of the present embodiment, the method for creating a container may further include: determining, based on a demand amount corresponding to the idle resource information of each work node and a preset scheduling strategy, a demand amount corresponding to each work node; and determining a work node with a demand amount satisfying a demand amount corresponding to a description file of the to-be-scheduled Pod as the target work node.

In the present implementation, the executing body may determine, based on the demand amount corresponding to the idle resource information of each work node and the preset scheduling strategy, the demand amount corresponding to each work node; and then determine a work node with a demand amount exceeding the demand amount corresponding to the description file of the to-be-scheduled Pod as the target work node. The demand amount corresponding to the idle resource information may be used for characterizing an amount of demand for the idle resource information. The demand amount may be used for characterizing a demand level for the work node.

In an example, the preset scheduling strategy may include: selecting a work node with an idle resource satisfying a preset threshold based on the demand amount corresponding to the idle resource information of each work node, where the idle resource may include a custom device resource, a graphics processing unit (GPU)/central processing unit (CPU)/memory/disk resource, and the like.

In an example, the preset scheduling strategy may include: selecting a corresponding machine based on a task type. For example, a machine with a Solid-State Drive (SSD) or Non-Volatile Memory (NVME) high-speed hard disk is preferred for a read/write-intensive task. For example, a machine with a 100G network card is preferred for a real-time computing task that is sensitive to network delay. For example, a machine with a high-performance CPU chip is preferred for a compute-intensive scientific computing task.

In an example, the preset scheduling strategy may include: a resource balancing scheduling strategy. For example, if a machine includes two resources: the CPU and the memory, they will be evenly allocated to avoid a circumstance where the memory is full while the CPU is empty.

In the present implementation, the target work node may be determined based on the demand amount, which is determined based on the demand amount corresponding to the idle resource information of each work node and the preset scheduling strategy, corresponding to each work node.

In some optional implementations of the present embodiment, the method for creating a container may further include: acquiring resource demand information corresponding to a training task of a to-be-trained target model; allocating, to the training task, a node satisfying the resource demand information corresponding to the training task based on the idle resource information of each node, and using the allocated node as a training node of the training task; and scheduling the training node to execute the training task, to complete training of the to-be-trained target model.

In the present implementation, the executing body may first acquire resource demand information corresponding to a training task of a to-be-trained target model; then allocate, to the training task, a node satisfying the resource demand information corresponding to the training task based on the idle resource information of each node, and use the allocated node as the training node of the training task; and then schedule the training node to execute the training task, to complete training of the to-be-trained target model.

In the present implementation, each node may belong to the k8s cluster, and a master node in the k8s cluster may be used for executing the acquiring of the idle resource information of each node.

In an example, after determining the resource demand information corresponding to the training task, the master node in the cluster may acquire current idle resource information from each node by performing traversing based on the resource demand information, to allocate a training node to the training task. In addition, the master node in the cluster may further periodically acquire the idle resource information of each node, thereby acquiring the resource condition of each node and implementing effective management of system resources.

In an example, a node may be randomly selected from nodes that can satisfy the resource demand information corresponding to the training task and be used as the training node of the training task. The selected node can satisfy the resource demand information corresponding to the training task, such that resource conflict is less likely to occur in a process of executing the training task.

In another optional embodiment, the training node of the training task may be determined based on difference information between the idle resource information of the node that can satisfy the resource demand information corresponding to the training task and the resource demand information corresponding to the training task. The difference information may include difference information of various types of resources, for example, a CPU (48 cores), a GPU (8 cards), a memory (256G), and a disk (2048G).

In a practical application, nodes used for determining whether the resource demand information corresponding to the training task can be satisfied generally belong to the same cluster. The fewer remaining resources of an executing node in the cluster are, the higher a resource utilization of the executing node is. Accordingly, there are more overall idle resources of the cluster to which the executing node belongs, and there are more resources allocatable to other training tasks. Thus, there are more training tasks that can be processed by the cluster, thereby improving an overall throughput of the cluster.

In order to facilitate describing the difference information between the idle resource information of each node and the resource demand information corresponding to the training task, the embodiment of the present disclosure determines a resource difference corresponding to each node respectively based on the difference information between the idle resource information of the node and the resource demand information corresponding to the training task. That is, the difference information corresponding to a node is described using the resource difference. Then, the embodiment of the present disclosure may determine the training node of the training task based on the resource difference corresponding to each node respectively.

Specifically, the smaller the resource difference is, the higher a probability that a node corresponding to the resource difference is determined as the training node is. The node with a smaller resource difference is determined as the training node of the training task, which means that the remaining resources of the training node are fewer, such that the training tasks that can be processed by the cluster to which the training node belongs are more, thereby improving the overall throughput of the cluster.

In an example, a node with a smallest resource difference may be determined as the training node of the training task, such that the cluster to which the training node belongs can process a largest number of training tasks, thereby maximizing the overall throughput of the cluster.

In the present implementation, in a training method of the target model, a resource of each node in the cluster is effectively managed, such that the node satisfying the resource demand information can be allocated to the training task of the to-be-trained target model based on the idle resource information of each node, and be used as the training node; and the training node can be scheduled to execute the training task of the to-be-trained target model, to complete training of the target model. Before the target model is trained, a node that can satisfy its training demand has been allocated to it, thereby avoiding the occurrence of resource conflict in a process of training the target model, and improving the training efficiency of the target model.

In some optional implementations of the present embodiment, the idle resource information includes idle resource information of the GPU.

In the present implementation, idle resource information corresponding to a device at each work node includes idle resource information corresponding to a graphics processing unit (GPU) in the device at each work node.

It should be noted that the device at each work node may include at least one GPU.

In the present implementation, the executing body may determine, based on a description file of a to-be-scheduled Pod and idle resource information corresponding a GPU in a device at each work node, a target work node from the work nodes; and then create a target container based on configuration information of a CRI request sent to a container engine in the CRI request at the target work node, such that an authority of the target container is consistent with the configuration information, thus implementing the control over the container authority.

Further referring to Fig. 3, a schematic diagram of interactions between components in a k8s cluster are shown. The schematic diagram of interaction includes the following steps.

Step I: defining, by a user, a list of to-be-managed devices in a configuration file, including a device quantity, an operation authority (read/write/modify), a host device file path, and an in-container device file path.

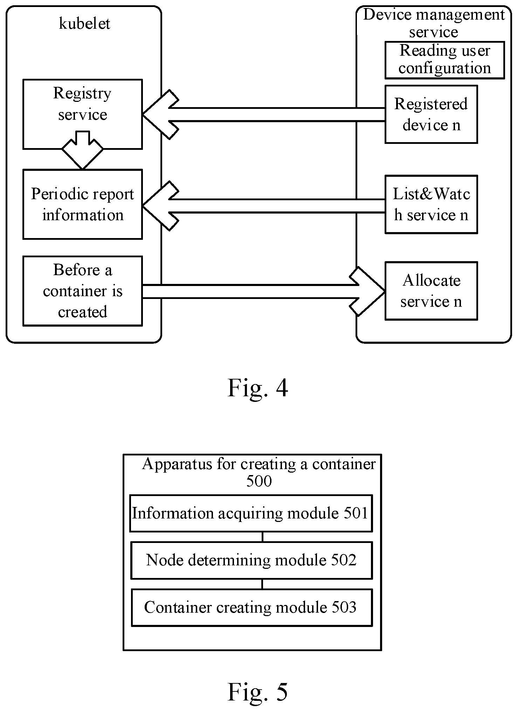

Step II: enabling a device management service, reading a configuration file configured for a user device, and analyzing the configuration file to obtain configuration information; and then registering the configuration information in a service of kubelet (for example, a registry service in Fig. 4). If the configuration information involves a plurality of input devices, such as an input device 0, an input device 1, and an input device 2 (for example, a registered device n in Fig. 4, where n is a positive integer), it is necessary to register the devices successively, until registering of the plurality of devices is completed; and then, IDs of the registered devices in the configuration information are recorded in the kubelet, and are periodically updated through a remote procedure call (gRPC) service of List&Watch.

Step III: enabling the gRPC service for each of a plurality of devices successively after completing the registering of the configuration information, and providing List&Watch and (device) allocate interfaces to outside. The device management service will periodically report a device status (including the number of available devices) at a node to the kubelet through an API (application programming interface) of the List&Watch (for example, a List&Watch service n in Fig. 4, where n is a positive integer). Thus, after obtaining the configuration information, the kubelet may directly add the number of available devices to a heartbeat sent by it to an API Server in a form of an extended resource, and periodically report the heartbeat (e.g., periodically report information in Fig. 4) to the API server. The List&Watch may sense an interruption or first startup of the API server using a List mechanism, where List is used as a short connection to acquire resource information, and Watch is used as a long connection to continuously receive and process resource changes.

Step IV: when a Pod requires to use one or more devices, it is only necessary to declare names and quantities of required devices in a limits field (e.g., k8s.input: 1; the number of applied input devices is 1) of a yaml description file of the Pod, determine, by a kube-scheduler, a work node (i.e., node) with a satisfactory device resource, and complete the binding of the Pod to the work node.

Step V: sending, after the scheduling is successful, by the kubelet (for example, before a container is created in Fig. 4), an allocate request to the device management service (for example, an allocate service n in Fig. 4), where parameters carried by the allocate request are a list of device IDs to be allocated to the container. After receiving the request, a device plug-in will return path and authority information inside and outside the container corresponding to the device to the kubelet based on the device ID.

Step VI: adding, by the kubelet, the configuration information to a corresponding CRI request for creating the container. When a container engine receives the CRI request, the corresponding configuration information will appear in the container created by the container engine, and an authority of the container is consistent with the configuration information.

Step VII: periodically scanning, by the device management service, the configuration file in the back-end, stopping, when the configuration file changes, e.g., adding a device, re-executing step I and step II, or deleting a device, the corresponding device services, and resetting the device.

In the present embodiment, compared with related technologies, the following technical effects are included: (1) without enabling a privileged mode for a container, an authority of the container can be controlled based on configuration information; (2) an authority of a device is controllable, i.e., a read/write/modify authority of the device is controllable; (3) a user can specify the number of devices during registry, and a k8s can schedule resources based on the number of available devices; (4) device paths inside and outside a Pod are specifiable; (5) the management of one of any number of devices is supported; (6) an added or deleted device type is automatically supported only by modifying a configuration file without modifying a code.

Further referring to Fig. 5, as an implementation of the method shown in the above figures, an embodiment of the present disclosure provides an apparatus for creating a container. The embodiment of the apparatus corresponds to the embodiment of the method shown in Fig. 2, and the apparatus may be specifically applied to various electronic devices.

As shown in Fig. 5, the apparatus 500 for creating a container of the present embodiment may include: a information acquiring module 501, a node determining module 502, and a container creating module 503. The information acquiring module 501 is configured to acquire a description file of a to-be-scheduled Pod, where the description file of the Pod is used for describing resource demand information; the node determining module 502 is configured to determine, based on the description file of the to-be-scheduled Pod and idle resource information of each of work nodes, a target work node from the work nodes, and bind the to-be-scheduled Pod to the target work node; and the container creating module 503 is configured to send a CRI request to a container engine, where the CRI request is used for instructing to create a target container at the target work node based on configuration information in the CRI request, and the configuration information is used for limiting an authority of the target container.

The related description of steps 201 to 203 in the corresponding embodiment of Fig. 2 may be referred to for specific processing of the information acquiring module 501, the node determining module 502, and the container creating module 503 of the apparatus 500 for creating a container in the present embodiment and the technical effects thereof, respectively. The description will not be repeated here.

In some optional implementations of the present embodiment, the apparatus for creating a container further includes: an information registering module configured to register the configuration information in a kubelet through the kubelet; and an information reporting module configured to report, in response to the registering the configuration information being completed, the idle resource information of each work node to the kubelet.

In some optional implementations of the present embodiment, the configuration information includes: a device name, a device quantity, an operation authority, a host device file path, and an in-container device file path.

In some optional implementations of the present embodiment, the idle resource information of each work node includes the number of available devices at each work node, and the apparatus for creating a container further includes:
an information sending module configured to send the number of available devices to an API server in a form of an expanded resource.

In some optional implementations of the present embodiment, the node determining module 502 is further configured to: determine, based on a demand amount corresponding to the idle resource information of each work node and a preset scheduling strategy, a demand amount corresponding to each work node; and determine a work node with a demand amount satisfying a demand amount corresponding to a description file of the to-be-scheduled Pod as the target work node.

In some optional implementations of the present embodiment, a plurality of target work nodes are determined from the work nodes, and the apparatus for creating a container further includes: the information acquiring module configured to acquire a training task of a to-be-trained target model and resource demand information corresponding to the training task; a node module configured to allocate, to the training task, a node satisfying the resource demand information corresponding to the training task based on the idle resource information of each work node in the plurality of target work nodes, and use the allocated node as a training node of the training task; and a model training module configured to schedule the training node to execute the training task, to train the to-be-trained target model.

In some optional implementations of the present implementation, idle resource information corresponding to a device at each work node includes idle resource information corresponding to a GPU in the device at each work node.

According to an embodiment of the present disclosure, the present disclosure further provides an electronic device, a readable storage medium, and a computer program product.

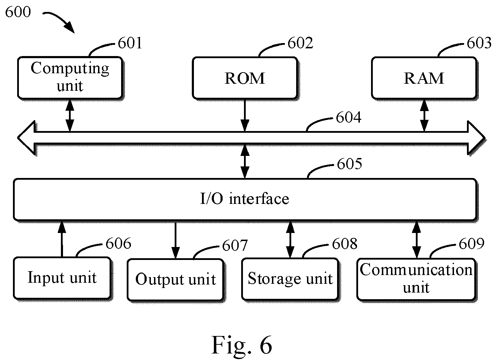

Fig. 6 shows a schematic block diagram of an example electronic device 600 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the device 600 includes a computing unit 601, which may execute various appropriate actions and processes in accordance with a computer program stored in a read-only memory (ROM) 602 or a computer program loaded into a random-access memory (RAM) 603 from a storage unit 608. The RAM 603 may further store various programs and data required by operations of the device 600. The computing unit 601, the ROM 602, and the RAM 603 are connected to each other through a bus 604. An input/output (I/O) interface 605 is also connected to the bus 604.

A plurality of components in the device 600 is connected to the I/O interface 605, including: an input unit 606, such as a keyboard and a mouse; an output unit 607, such as various types of displays and speakers; a storage unit 608, such as a magnetic disk and an optical disk; and a communication unit 609, such as a network card, a modem, and a wireless communication transceiver. The communication unit 609 allows the device 600 to exchange information/data with other devices via a computer network such as the Internet and/or various telecommunication networks.

The computing unit 601 may be various general-purpose and/or special-purpose processing components having a processing power and a computing power. Some examples of the computing unit 601 include, but are not limited to, a central processing unit (CPU), a graphics processing unit (GPU), various special-purpose artificial intelligence (AI) computing chips, various computing units running a machine learning model algorithm, a digital signal processor (DSP), and any appropriate processor, controller, micro-controller, and the like. The computing unit 601 executes various methods and processes described above, such as the method for creating a container. For example, in some embodiments, the method for creating a container may be implemented as a computer software program that is tangibly included in a machine-readable medium, such as the storage unit 608. In some embodiments, some or all of the computer programs may be loaded and/or installed onto the device 600 via the ROM 602 and/or the communication unit 609. When the computer program is loaded into the RAM 603 and executed by the computing unit 601, one or more steps of the method for creating a container described above may be executed. Alternatively, in other embodiments, the computing unit 601 may be configured to execute the method for creating a container by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data and instructions from, and transmit data and instructions to, a storage system, at least one input apparatus, and at least one output apparatus.

Program codes for implementing the method of the present disclosure may be compiled using any combination of one or more programming languages. The program codes may be provided to a processor or controller of a general-purpose computer, a special-purpose computer, or other programmable data processing apparatuses, such that the program codes, when executed by the processor or controller, cause the functions/operations specified in the flowcharts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine-readable medium may be a tangible medium which may contain or store a program for use by, or used in combination with, an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical memory device, a magnetic memory device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions mentioned in the present disclosure can be implemented. This is not limited herein.

The above specific implementations do not constitute any limitation to the scope of protection of the present disclosure. It should be understood by those skilled in the art that various modifications, combinations, subcombinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for creating a container, comprising:
acquiring (201) a description file of a to-be-scheduled container group (Pod), wherein the description file of the Pod is used for describing resource demand information;
determining (202), based on the description file of the to-be-scheduled Pod and idle resource information of each of work nodes, a target work node from the work nodes, and binding the to-be-scheduled Pod to the target work node; and
sending (203) a container runtime interface (CRI) request to a container engine, wherein the CRI request is used for instructing to create a target container at the target work node based on configuration information in the CRI request, and the configuration information is used for limiting an authority of the target container.

2. The method according to claim 1, wherein the idle resource information of each of the work nodes is determined by:
registering the configuration information in a node agent kubelet; and
reporting, in response to the registering the configuration information being completed, the idle resource information of each work node to the kubelet.

3. The method according to claim 1 or 2, wherein the configuration information comprises: a device name, a device quantity, an operation authority, a host device file path, and an in-container device file path.

4. The method according to any one of claims 1 to 3, wherein the idle resource information of each work node comprises a number of available devices at each work node, and the method further comprises:
sending the number of available devices to an API server in a form of an expanded resource.

5. The method according to any one of claims 1 to 4, wherein determining, based on the description file of the to-be-scheduled Pod and the idle resource information of each work node, the target work node from the work nodes comprises:
determining, based on a demand amount corresponding to the idle resource information of each work node and a preset scheduling strategy, a demand amount corresponding to each work node; and
determining a work node with a demand amount satisfying a demand amount corresponding to a description file of the to-be-scheduled Pod as the target work node.

6. The method according to any one of claims 1 to 5, wherein a plurality of target work nodes are determined from the work nodes, and the method comprises:
acquiring a training task of a to-be-trained target model and resource demand information corresponding to the training task;
allocating, to the training task, a node satisfying the resource demand information corresponding to the training task based on the idle resource information of each work node in the plurality of target work nodes, and using the allocated node as a training node of the training task; and
scheduling the training node to execute the training task, to train the to-be-trained target model.

7. The method according to any one of claims 1 to 6, wherein idle resource information corresponding to a device at each work node comprises idle resource information corresponding to a graphics processing unit (GPU) in the device at each work node.

8. An apparatus for creating a container, comprising:
an information acquiring module (501) configured to acquire a description file of a to-be-scheduled container group (Pod), wherein the description file of the Pod is used for describing resource demand information;
a node determining module (502) configured to determine, based on the description file of the to-be-scheduled Pod and idle resource information of each of work nodes, a target work node from the work nodes, and bind the to-be-scheduled Pod to the target work node; and
a container creating module (503) configured to send a container runtime interface (CRI) request to a container engine, wherein the CRI request is used for instructing to create a target container at the target work node based on configuration information in the CRI request, and the configuration information is used for limiting an authority of the target container.

9. The apparatus according to claim 8, wherein the apparatus further comprises:
an information registering module configured to register the configuration information in a node agent kubelet; and
an information reporting module configured to report, in response to the registering the configuration information being completed, the idle resource information of each work node to the kubelet,
preferably, the configuration information comprises: a device name, a device quantity, an operation authority, a host device file path, and an in-container device file path.

10. The apparatus according to any one of claims 8 to 9, wherein the idle resource information of each work node comprises a number of available devices at each work node, and the apparatus further comprises:
an information sending module configured to send the number of available devices to an API server in a form of an expanded resource.

11. The apparatus according to any one of claims 8 to 10, wherein the node determining module is further configured to:
determine, based on a demand amount corresponding to the idle resource information of each work node and a preset scheduling strategy, a demand amount corresponding to each work node; and
determine a work node with a demand amount satisfying a demand amount corresponding to a description file of the to-be-scheduled Pod as the target work node.

12. The apparatus according to any one of claims 8 to 11, wherein a plurality of target work nodes are determined from the work nodes, and the apparatus further comprises:
the information acquiring module configured to acquire a training task of a to-be-trained target model and resource demand information corresponding to the training task;
a node module configured to allocate, to the training task, a node satisfying the resource demand information corresponding to the training task based on the idle resource information of each work node in the plurality of target work nodes, and use the allocated node as a training node of the training task; and
a model training module configured to schedule the training node to execute the training task, to train the to-be-trained target model,
preferably, idle resource information corresponding to a device at each work node comprises idle resource information corresponding to a graphics processing unit (GPU) in the device at each work node.

13. An electronic device, comprising:
at least one processor; and
a memory communicatively connected to the at least one processor; wherein
the memory stores instructions executable by the at least one processor, and the instructions are executed by the at least one processor, such that the at least one processor can execute the method according to any one of claims 1 to 7.

14. A non-transitory computer readable storage medium storing computer instructions, wherein the computer instructions are used for causing the computer to execute the method according to any one of claims 1 to 7.

15. A computer program product, comprising a computer program, wherein the computer program, when executed by a processor, implements the method according to any one of claims 1 to 7 .
